Europäisches Patentamt

European Patent Office

Office européen des brevets

(19)

(11) EP 0 770 566 B1

(12) EUROPÄISCHE PATENTSCHRIFT

(45) Veröffentlichungstag und Bekanntmachung des Hinweises auf die Patenterteilung:
14.07.1999 Patentblatt 1999/28

(51) Int. Cl.$^6$: B65G 47/86, B65G 29/00

(21) Anmeldenummer: 96810614.6

(22) Anmeldetag: 16.09.1996

(54) **Übergabevorrichtung**

Transferring device

Dispositif de transfert

(84) Benannte Vertragsstaaten:
BE CH DE FR GB IT LI

(30) Priorität: 27.10.1995 DE 19540158

(43) Veröffentlichungstag der Anmeldung:
02.05.1997 Patentblatt 1997/18

(73) Patentinhaber:
Maschinenfabrik Polytype S.A.
1701 Fribourg (CH)

(72) Erfinder:
• Goeb, Claude
67540 Ostwald (DE)
• Süss, Karl-Heinz
76676 Graben-Neudorf (DE)

(56) Entgegenhaltungen:
EP-A- 0 453 595          EP-A- 0 585 822
DE-C- 4 010 601          FR-A- 2 496 065
US-A- 4 050 574

**Beschreibung**

Die vorliegende Erfindung betrifft eine Vorrichtung zum Übergeben von Gegenständen von einem einlaufenden Transportmittel zu einem auslaufenden Transportmittel entsprechend dem Oberbegriff von Anspruch 1.

Beim Transport von Gegenständen tritt häufig das Problem auf, das die Gegenstände von einem ersten Transportmittel zu einem zweiten Transportmittel übergeben werden müssen, um beispielsweise die Geschwindigkeit oder die Lagen der Gegenstände zueinander oder beides zu verändern.

Aus der DE 40 10 601 C1 ist für eine automatisierte Dosen- oder Tubenfertigung eine trommelartige Vorrichtung zur Übergabe dieser zu bearbeitenden Gegenstände von einem zu der Vorrichtung einlaufenden Transportmittel auf ein dazu mit anderer Geschwindigkeit von der Vorrichtung auslaufendes Transportmittel bekannt. Die bekannte Übergabevorrichtung weist einen drehangetriebenen Rotor auf, an den mehrere Haltemittel zum Transportieren der zu übergebenden Gegenstände angelenkt sind. Die Anlenkung der Haltemittel erfolgt mittels je eines am Rotor drehgelagerten Schwenkhebels mit Kurvenrollen, der beim Drehen des Rotors um die Rotorachse umläuft und dabei entlang einer maschinenfest angeordneten Steuerkurve zwangsgeführt wird. Die Haltemittel sind an den umfangsseitigen Enden von auf der Rotorachse drehgelagerten starren Schwenkarmen befestigt, die zur Erzeugung einer ungleichförmigen Winkel- bzw. Umlaufgeschwindigkeit der Haltemittel über Mehrgelenkgetriebe mit ihren Steuermitteln gekoppelt sind und damit um die Rotorachse drehen. Um die Gegenstände während des Transports durch die Übergabevorrichtung sicher halten zu können, werden sie durch die Haltemittel angesaugt.

Aus der FR-2 496 065 ist eine Übertragungsvorrichtung in einer Zigaretten-Filtereinsetzmaschine zum Übergeben von stabförmigen Gegenständen, insbesondere Zigaretten bekannt, bei der mehrere zylindrische Förderer vorgesehen sind und die teilweise in Umfangsrichtung eine unterschiedliche Rillenteilung, zum Aufnehmen der Fördergegenstände, aufweisen. Der zentrale Übergangsförderer, als Teilungsänderungsvorrichtung ausgebildet, enthält ein erstes Drehorgan, welches eine Vielzahl hebelförmiger Endstücke abstützt und ein zweites Drehorgan, das sinngleich zum und mit derselben Winkelgeschwindigkeit des ersten um eine Achse dreht, die getrennt und parallel zur Achse des ersten Drehorgans liegt.

Der Erfindung liegt die Aufgabe zugrunde, eine kostengünstige Vorrichtung mit einem Rotor mit wenigstens einem mit Vakuum einen Gegenstand stützenden Haltemittel zum Transport von einem zum Rotor einlaufenden zu einem davon auslaufenden Transportmittel so zu gestalten, dass sich eine einfache, kompakte Vorrichtung ergibt.

Diese Aufgabe wird durch den Gegenstand von Anspruch 1 gelöst.

Die Erfindung geht von einer Vorrichtung zum Übergeben von Gegenständen von einem einlaufenden Transportmittel zu einem auslaufenden Transportmittel aus, die einen drehangetriebenen Rotor, wenigstens ein an den Rotor zum gemeinsamen Antrieb angelenktes Haltemittel für den Transport der Gegenstände von dem einlaufenden zu dem auslaufenden Transportmittel und ein mit dem Haltemittel verbundenes Steuermittel aufweist, das zur Erzeugung einer ungleichförmigen Geschwindigkeit des Haltemittels während des Transports der zu übergebenden Gegenstände anhand einer Steuerkurve zwangsgeführt wird und dabei das Haltemittel mitnimmt.

Lösungsgemäß ist das Haltemittel an dem Rotor schwenkbar um eine Schwenkachse gelagert, die nicht mit der Rotorachse zusammenfällt, sondern von dieser beabstandet ist. Hierdurch wird der Drehbewegung um die Rotorachse die durch das Steuermittel gesteuerte Schwenkbewegung um die von der Rotorachse beabstandete Schwenkachse überlagert. Das Haltemittel muß entsprechend den Geschwindigkeitserfordernissen in der Übergabestrecke lediglich gegenüber dem Rotor beschleunigt oder verzögert werden. Die Zahl der Getriebeglieder zwischen dem Steuermittel und dem Haltemittel kann erheblich verringert werden. Während nach dem Stand der Technik ein mehrarmiges Mehr-Gelenkgetriebe und zusätzlich ein Schwenkebel erforderlich sind, kommt die Lösungsgemäße Übergabevorrichtung pro Haltemittel bereits mit einem zweiarmigen Ein-Gelenkgetriebe aus, wobei der Rotor selbst ein Getriebeglied des zweiarmigen Getriebes darstellt.

Bevorzugterweise ist an dem Rotor ein in sich starres zweites Getriebeglied um eine zur Rotorachse parallele Schwenkachse verschwenkbar gelagert. Vorzugsweise ist das zwei te Getriebsglied als zweiarmiger Schwenkhebel ausgebildet. Ein erster Arm des Schwenkhebels, der als Träger für das Haltemittel dient, weist in einer radialen Richtung zur Rotorachse. An dem vom Haltemittel aus gesehen über die Schwenkachse hinausstehenden zweiten Arm ist als Steuermittel eine Laufrolle angeordnet. Mittels eines Zwangsführungsmittels, vorzugsweise eine Druckfeder, wird das Steuermittel gegen eine maschinenseitige Steuerkurve gedrückt, die so ausgebildet ist, daß das gewünschte Geschwindigkeitsprofil für das Haltemittel erzielt wird.

Neben der getriebetechnischen Vereinfachung weist die Lösungsgemäße Vorrichtung den Vorteil auf, daß das Haltemittel auf einfache Art und Weise mit einer Vakuumquelle verbunden oder mit einem Druckmedium versorgt werden kann. Dies ist bei solchen Verwendungen von Vorteil, bei denen die zu übergebenden Gegenstände, den sicheren Transport in der Übergangsstrecke unterstützend, am oder im Haltemittel durch Ansaugen gehalten werden. Dies gilt im umgekehrten Falle auch bei Anwendungen, die unterstützend ein Druckmedium erfordern.

Ein fluiddichter Anschluß des Haltemittels führt durch dessen Schwenklager hindurch. Das Haltemittel ist auf einer Welle um die Schwenkachse angeordnet, die an einer ihrer Stirnseiten eine Öffnung aufweist, durch die das Haltemittel mit einer Vakuum- oder Druckquelle verbunden werden kann. Die Verbindung mit der Vakuum- oder Druckquelle erfolgt über eine einzige Schnittstelle, an der zwei sich relativ gegeneinander bewegende Teile aneinander stoßen. Die beiden überlagerten Bewegungen des Haltemittels, nämlich die Drehbewegung des ersten Getriebeglieds, des Rotors, und die Schwenkbewegung des zweiten Getriebeglieds, des Schwenkhebels, werden in einer einzigen Anschlußschnittstelle zusammengefaßt.

Der Rotor und eine dem Rotor stirnseitig gegenüberliegende Steuerscheibe für den Fluidanschluß wirken in der Art zweier Ventilsteuerscheiben zusammen. Die maschinenseitig angebrachte Steuerscheibe weist in einem Teilbereich ihrer Oberfläche, die von dem Schwenklager bzw. der Welle des Haltemittels überstrichen wird, eine Ausnehmung auf, über die das Haltemittel mit der Vakuum- oder Druckquelle verbunden wird. Die Schwenkbewegung der Schwenkwelle braucht hierbei nicht gesondert berücksichtigt zu werden.

In einer Ausführungsform dient eine Vorrichtung zum Übergeben von Gegenständen, die durch das einlaufende Transportmittel hintereinander herantransportiert und von dem auslaufenden Transportmittel nebeneinander abtransportiert werden. Bei einer bevorzugten Verwendung, nämlich in der Fertigung von Hohlkörpern, insbesondere Tuben und Dosen, tritt solch ein Transportproblem beispielsweise dann auf, wenn die Hohlkörper in einer Trocknungs- oder Einbenneinrichtung getrocknet oder eine zuvor aufgebrachte Lackschicht eingebrannt werden sollen. In diesem Anwendungsfall ist die Transportgeschwindigkeit durch den Trockner bzw. durch den Ofen hindurch, der erforderlichen Einwirkzeit wegen, im Vergleich zur Geschwindigkeit des Antransports gering. Um die Kontinuität des gesamten Fertigungsprozesses nicht zu stören, werden die hintereinander angeförderten Hohlkörper gruppenweise nebeneinander durch den Trockner bzw. den Ofen hindurchgefördert. Die Transportgeschwindigkeit durch den Trockner bzw. Ofen hindurch ist entsprechend der Anzahl der umgruppierten Hohlkörper, d.h. im Verhältnis der hintereinander angeförderten zu den nebeneinander weitergeförderten Hohlkörpern, verringert.

Bei den Transportmitteln handelt es sich üblicherweise um Horizontalförderer, insbesondere Förderbänder mit aufgesetzten Transportschalen, in denen die Gegenstände einzeln liegen. Die Übergabevorrichtung wird vorzugsweise durch eine sogenannte Übergabetrommel gebildet.

Ein bevorzugtes Ausführungsbeispiel der Erfindung wird nachfolgend anhand von Figuren beschrieben. Es zeigen:

Figur 1　eine Vorrichtung zum Übergeben von Gegenständen von einem einlaufenden zu einem auslaufenden Transportmittel in der Seitenansicht,

Figur 2　eine Draufsicht auf das einlaufende und das auslaufende Transportmittel nach Figur 1,

Figur 3　die Übergabevorrichtung nach Figur 1 mit auf einer gemeinsamen Welle nebeneinander angeordneten Rotoren im Längsschnitt,

Figur 4　einen der Rotoren nach Figur 3,

Figur 5　eine Darstellung des Funktionsprinzips der Übergabevorrichtung,

Figur 6　eine Darstellung der Synchronisation von mehreren um eine Rotorachse hintereinander umlaufenden Haltemitteln für die Gegenstände und

Figur 7　eine Darstellung der Hebelverhältnisse bei der Übergabevorrichtung.

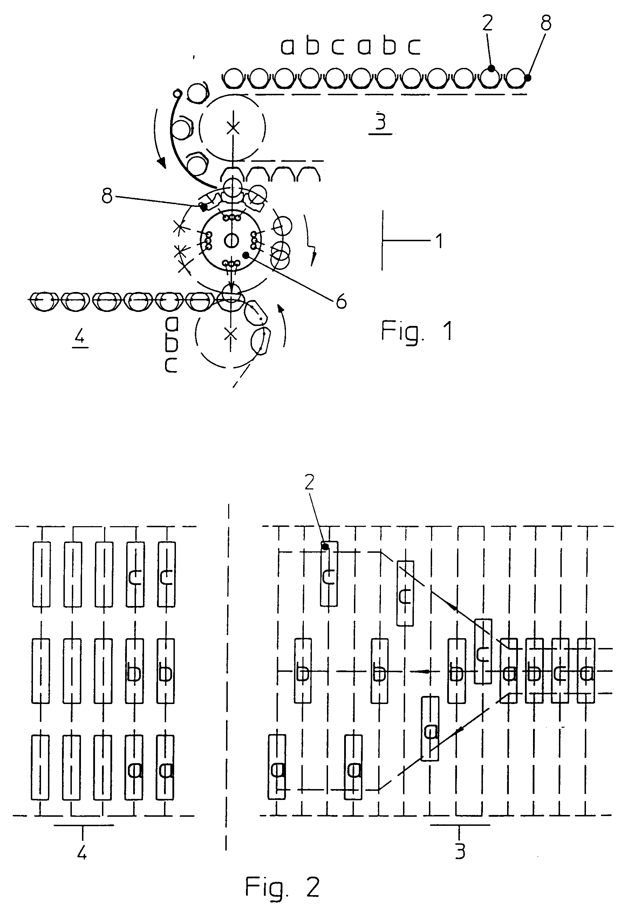

Figur 1 zeigt die Übergabe von Gegenständen 2, die auf einem einlaufenden, im folgenden als Einlaufband bezeichneten Transportmittel 3 angefördert werden, auf ein die Gegenstände 2 weitertransportierendes, auslaufendes Transportmittel 4, das im folgenden dementsprechend als Auslaufband bezeichnet wird. Eine Umlenkrolle des Einlaufbandes 2 und eine Umlenkrolle des Auslaufbandes 4 sind zusammen mit einer dazwischen angeordneten Übergabevorrichtung 1 vertikal übereinander angeordnet. Die Übergabevorrichtung 1 ist als Übergabetrommel ausgebildet.

Während des Transports auf dem Einlaufband 3, in der Übergabestrecke an der Übergabetrommel 1 und auf dem Auslaufband 4 sind die Gegenstände 2 einzeln durch Haltemittel 8 - im Ausführungs beispiel Transportschalen - gehalten. Auf dem Einlaufband 3 werden die Gegenstände 2 hintereinander angefördert. Dies soll durch die Sequenz a, b, c, wobei jeder Buchstabe für einen einzelnen Gegenstand 2 steht, angedeutet werden. In dieser Reihenfolge a, b, c, werden die Gegenstände 2 in den Bereich einer Umlenkrolle gefördert, der im Umlenkbereich umfangsseitig gegenüberliegend ein Leitblech angeordnet ist, damit die Gegenstände 2 beim Umlenken nicht aus den Transportschalen fallen können. Das Umlenkblech reicht in etwa bis in einen Bereich der Umlenkrolle hinein, der einer Umlenkung von etwa 180° entspricht.

Vertikal unter der Umlenkrolle des Einlaufbandes 3 ist die drehangetriebene Übergabetrommel 1 angeordnet. Über den Umfang der Übergabetrommel 4 verteilt laufen im Ausführungsbeispiel zwölf Transportschalen 8 um. Ein zu übergebender Gegenstand 2 gelangt schwerkraftunterstützt nach Verlassen des Bereichs des Leitblechs aus seiner Transportschale am Einlaufband 3 in die in diesem Moment vertikal darunter befindliche Transportschale 8 der Übergabetrommel 1.

Gleichzeitig wird der Gegenstand 2 in die Transportschale 8 gesaugt. Jede der Transportschalen 8 der Übergabetrommel 1 ist so geformt, daß der darin gehaltene Gegenstand 2 zentriert wird. Ferner ist jede der Transportschalen 8 mit einer Ansaugfunktion ausgestattet, so daß ein Gegenstand sogleich bei der Aufnahme und danach in der Übergabestrecke auch entgegen der Fliehkraftwirkung darin gehalten werden kann.

Dies stellt bei der bevorzugten Verwendung der Übergabevorrichtung, nämlich der Übergabe von Hohlkörpern, insbesondere von Dosen, Tuben und dergleichen, kein grundsätzliches Problem dar. Was die Ansaugfunktion der Transportschalen 8 der Übergabevorrichtung 1 anbetrifft, so kann auf die im Stand der Technik bekannten Transportschalen zurückgegriffen werden.

Die Gegenstände 2 werden bei der Übergabe zur Übergabetrommel 1 und bei der nachfolgenden Übergabe auf das Auslaufband 4 in der Richtung ihres jeweiligen Antransports weitertransportiert. Im Verlauf einer 180°-Drehung der Übergabetrommel 1, der Übergabestrecke, werden jeweils drei hintereinander angeförderte, in der Reihenfolge a, b, c nacheinander übernommene Gegenstände 2 auf in Transportrichtung gesehen gleiche Höhe zusammengeführt und nebeneinander auf das Auslaufband 4 übergeben.

Anhand der in Figur 2 dargestellten Draufsicht auf das Einlauf und das Auslaufband 3 und 4 wird der durch die Übergabevorrichtung des Ausführungsbeispiels zu bewerkstelligende Geschwindigkeits- und Lageausgleich zwischen Antransport und Abtransport ersichtlich. Auf dem Einlaufband 3 werden die Gegenstände 2 in der Reihenfolge a, b, c mit der Geschwindigkeit v zunächst in einer Reihe hintereinander angefördert. Über entsprechend angeordnete Weichen werden die Transportschalen, in denen die Gegenstände dabei liegen, zunächst auf dem Einlaufband 3 quer zur Transportrichtung auseinandergezogen, so daß sie nebeneinander und in ihrer ursprünglichen Teilung hintereinander versetzt zur Übergabevorrichtung gefördert werden. Auf dem Auslaufband 4 werden im Ausführungsbeispiel jeweils drei Gegenstände 2 nebeneinander und in der Teilung des Einlaufbandes 3 hintereinander weitertransportiert, da die Teilung der Transportschalen des Antransports gleich der des Abtransports ist. Die Geschwindigkeit des Auslaufbandes 4 beträgt dementsprechend v/3. Durch die Übergabevorrichtung sind somit mehrere hintereinander angeförderte Gegenstände 2 zunächst auf in Transportrichtung gesehen gleiche Höhe zu bringen und zusätzlich auf einen Bruchteil der Geschwindigkeit des Einlaufbandes 3 zu verzögern.

Wie in Figur 1 erkennbar, sind zum Zwecke dieses Geschwindigkeits- und Lageausgleichs über den Umfang der Übergabetrommel 1 zwölf Transportschalen 8 verteilt angeordnet. Die Transportschalen 8 sind zu Dreiergruppen zusammengefaßt, so daß vier solcher Dreiergruppen kreuzartig zueinander angeordnet sind. Die drei Transportschalen 8 jeder der vier Dreiergruppen liegen in der Senkrechten zur Zeichnungsebene hintereinander.

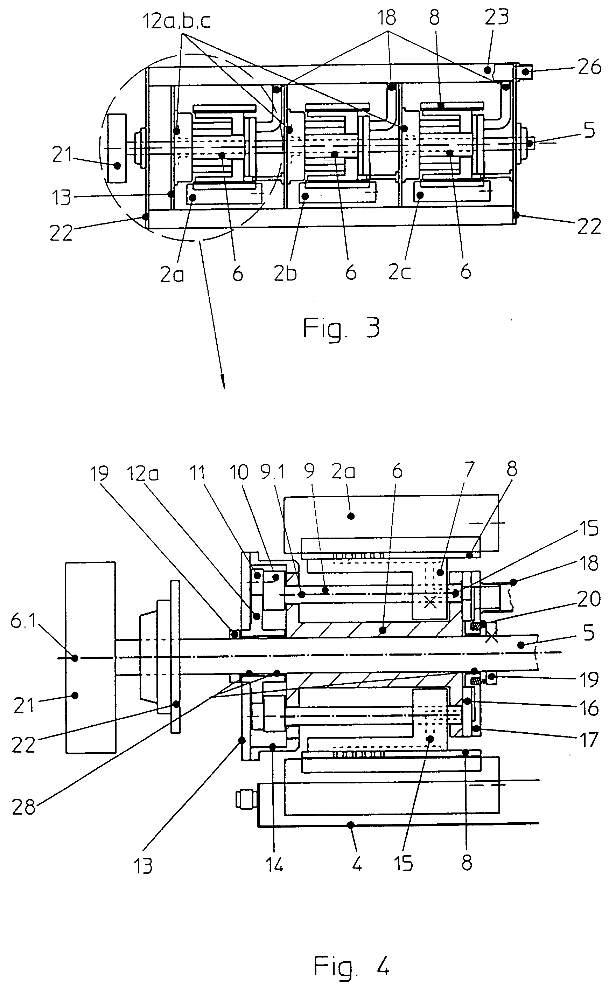

Figur 3 zeigt die Übergabetrommel 1 im Längsschnitt. Auf einer über ein Antriebsrad 21 angetriebenen, gemeinsamen Antriebswelle 5 sitzen drehfest drei Rotoren 6 nebeneinander. An jeden der Rotoren 6 sind vier Transportschalen 8 schwenkbar angelenkt. Drei Transportschalen 8 mit Gegenständen 2a, 2b, 2c befinden sich gerade auf gleicher Höhe, d. h. in der Übergabestellung unmittelbar vor der Übergabe an das Auslaufband. Zwei äußere Traversen 22 übernehmen zusammen mit axialen, peripheren Stützrohren 23 Rahmen- und Stützfunktion für die Übergabetrommel 1. Zusätzlich ist zu je einer Stirnseite jedes Rotors 6 eine Drehmomentstütze 13 angeordnet, die ihrerseits an den Stützrohren 23 angebracht ist. Jede der Transportschalen 8 kann über einen gemeinsamen Anschluß 26 und je eine rotoreigene Fluidleitung 18 mit einer nicht dargestellten Vakuumquelle verbunden werden, um die Gegenstände in der Übergabestrecke in den Transportschalen 8 zu halten.

In Figur 4 ist beispielhaft einer der Rotoren 6 im Detail dargestellt. Der Rotor 6 besitzt die Form einer Kabeltrommel mit einem mittleren hülsenförmigen Teil und zwei seitlichen Flanschen. Er ist auf der Antriebswelle 5 drehfest befestigt. An den Rotorflanschen sind Pendelwellen 9, im Ausführungsbeispiel vier Pendelwellen 9, drehbar jeweils um Schwenkachsen 9.1 beidseitig gelagert. Auf jeder Pendelwelle 9 ist ein Träger 7, auf dem eine Transportschale 8 befestigt ist, drehfest angebracht. Die Schwenkachsen 9.1 sind über einen Mittenkreis jedes Rotorflansches gleichmäßig verteilt und weisen parallel zur Rotorachse 6.1.

An einem über eines ihrer beiden Schwenklager hinausragendem Ende ist an der Pendelwelle 9 ein Rollenhebel 10 starr angebracht, an dem eine Kurvenrolle 11 drehbar befestigt ist, die bei einer Drehung des Rotors 6 auf einer ortsfesten Steuerkurve 12a abläuft. Durch die Zwangsbewegung der Kurvenrolle 11 wird über den Rollenhebel 10 eine Schwenkbewegung des Trägers 7 bewirkt. Der Träger wird seiner Funktion entsprechend nachfolgend als Schwenkarm 7 bezeichnet. Die Steuerkurve 12a wird zwischen dem Rotorflansch und einem Stützring 19 geklemmt und mit einer äußeren Stirnseite auf der inneren Seite der Drehmomentstütze 13 befestigt. Eine Dichtglocke 14 schützt den Raum, in dem die Kurvenrollen 11 auf der Steuerkurve 12a ablaufen, nach außen, d. h. in radialer Richtung zur Antriebswelle 5, gegen Verschmutzung. Hierzu ist die Dichtglocke 14 mit einer Flanschstirnseite an der inneren Stirnseite der Drehmomentstütze 13 befestigt und dichtet den Raum an der Umfangsfläche des gegenüberliegenden Flansches des Rotors 6 ab.

Jeder Gruppe von Pendelwellen 9, die mit einem der Rotoren 6 umlaufen, ist eine Steuerkurve zugeordnet; im Ausführungsbeispiel sind dies drei Steuerkurven 12a, 12b und 12c (Figur 3). Die Steuerkurven 12a, 12b, 12c sind so geformt, daß die Umfangsgeschwindigkeit der Transportschalen 8 von der Transportgeschwindigkeit des Einlaufbandes 3 auf die Transportgeschwindigkeit des Auslaufbandes 4 verzögert wird. Dieser gemeinsamen Verzögerung überlagert wird die Auflaufbewegung der um die Rotorachse 6.1 nebeneinander umlaufenden Transportschalen 8 in der Übergabestrecke und deren Auseinanderziehen in der Strecke zwischen der Abgabe der Gegenstände und der Aufnahme nachfolgend antransportierter Gegenstände.

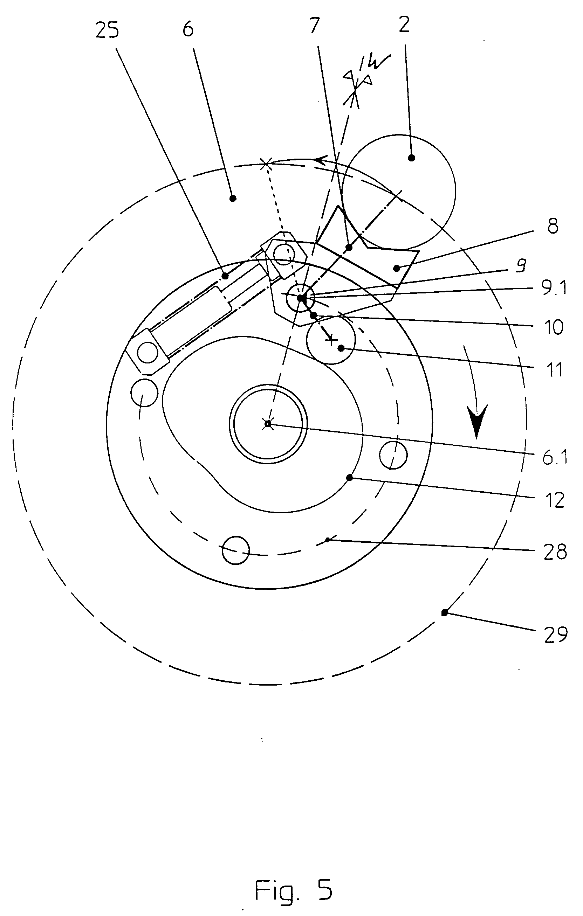

In Figur 5 ist das Getriebe zur Erzeugung der erforderlichen ungleichförmigen Geschwindigkeit einer Transportschale 8 schematisch dargestellt. Das Getriebe umfaßt den Rotor 6, die Pendelwelle 9 mit Rollenhebel 10 und Kurvenrolle 11 und den Schwenkarm 7. Der Rotor 6 rotiert gleichförmig um seine Rotorachse 6.1. Die Schwenkachse 9.1 der an beiden Rotorflanschen schwenkbar gelagerten Pendelwelle 9 läuft dabei zwangsweise auf einem Mittenkreis 28 um die Rotorachse 6.1 um. Der Schwenkarm 7 und der Rollenhebel 10 als Hebelarm hierzu bilden zusammen einen Schwenkhebel mit der Schwenkachse 9.1. Der Schwenkarm 7 und der Rollenhebel 10 sind zueinander starr angeordnet. In Figur 5 sind sämtliche Schwenkachsen 9.1 entlang des gemeinsamen Mittenkreises 28 eingezeichnet, wobei die jeweils vergleichsweise eng beabstandeten Schwenkachsen einer Dreiergruppe von Transportschalen 8 jede an einem der drei Rotoren gebildet wird.

Die Verbindungslinie zwischen der Schwenkachse 9.1 und dem Drehlager für die Kurvenrolle 11 am Rollenhebel 10 und die Verbindungslinie zwischen der Schwenkachse 9.1 und der Längsachse eines im Ausführungsbeispiel im Querschnitt kreisrunden Gegenstandes 2, also der wirksame Schwenkarm, stehen in etwa rechtwinkelig zueinander. Die Kurvenrolle 11 wird durch eine Druckfeder 25, die mit einem Ende am Rotor 6 und mit ihrem anderen Ende am Schwenkarm 7 befestigt ist, gegen die Steuerkurve 12 gedrückt. Es können auch andere, aus dem Stand der Technik bekannte Maßnahmen ergriffen werden, um eine Zwangsführung der Kurvenrolle 11 entlang der Steuerkurve 12 herbeizuführen. Durch die Schwenkbewegung des Haltemittelschwenkarms 7 um seine Schwenkachse 9.1 wird der konstanten Drehgeschwindigkeit des Rotors 6 eine zweite Geschwindigkeit, nämlich die der Schwenkbewegung, überlagert, so daß die Transportschale 8 mit dem darin gehaltenen Gegenstand 2 der Rotorgeschwindigkeit voraus- oder nacheilt. Durch die Form der Steuerkurve 12, die wirksame Länge des Schwenkarms 7, die Länge des Rollenhebels 10 und die Anordnung des Rollenhebels 10 am Schwenkarm 7 kann die Geschwindigkeit der Transportschale 8 dem Einsatz entsprechend in weiten Grenzen variiert werden.

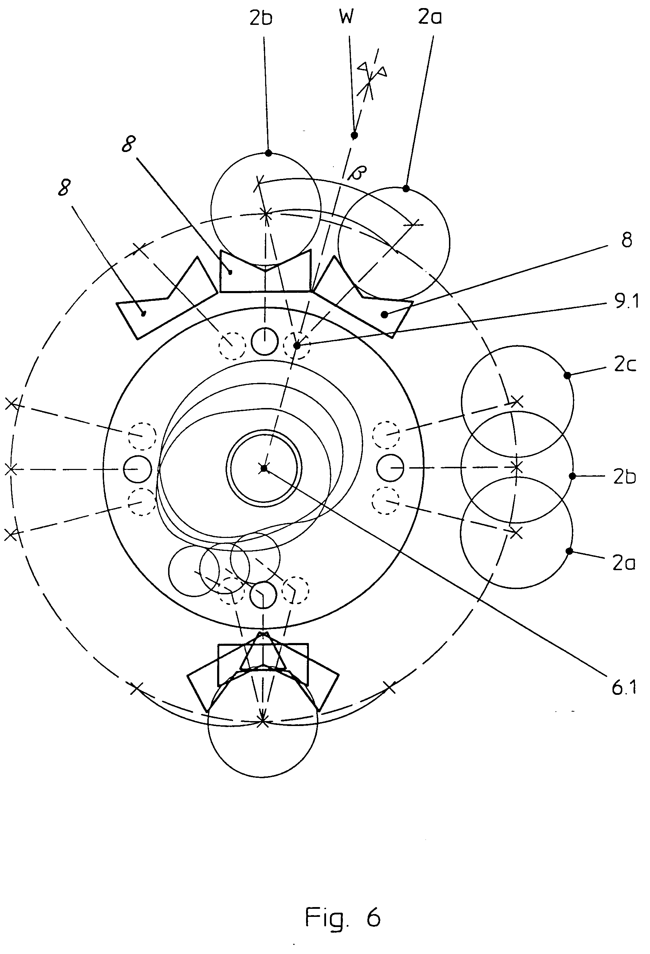

Figur 6 zeigt die Übergabetrommel 1 mit ihren insgesamt zwölf Transportschalen 8 im Moment der Übernahme eines antransportierten Gegenstandes 2 und der gleichzeitigen Übergabe dreier Gegenstände 2 auf das Auslaufband 4. In Figur 6 sind lediglich die Relativbewegungen der Transportschalen 8 zueinander dargestellt. Diesen Relativbewegungen ist die gemeinsame Verzögerung auf die Geschwindigkeit des Abtransports noch zu überlagern. Ein Zielkreis 29 verbindet solche Referenzpunkte oder -achsen der Gegenstände 2 miteinander, beispielsweise die Mittellängsachsen von kreisrunden Dosen, die zur Übergabe auf das Auslaufband 4 miteinander in Deckung gebracht werden sollen. Bei anderen Querschnittsformen können Referenzachsen nach geeigneten Kriterien anders bestimmt werden.

Die drei zusammenzuführenden Transportschalen 8 weisen bei der Übernahme der Gegenstände 2 vom Einlaufband 3 zueinander die gleiche Teilung wie das Einlaufband 3 auf. Bis zur Übergabe an das Einlaufband wird eine vorlaufende Transportschale 8 relativ zu einer mittleren Transportschale 8 zurückgeschwenkt, und eine nachlaufende Transportschale 8 wird entsprechend zur mittleren Transportschale 8 vorgeschwenkt, so daß sich diese drei Transportschalen 8 bei der Übergabe zum Auslaufband 4 in der Darstellung von Figur 6 in Deckung befinden. Die vorlaufende und die nachlaufende Transportschale 8 werden hierzu jeweils relativ zur mittleren Transportschale 8 um einen Winkel β um ihre Schwenkachsen 9.1 geschwenkt. Damit die Referenzachsen der auf gleiche Höhe auflaufenden Gegenstände 2a, 2b und 2c bei der Übergabe einander überdecken, sind die wirksamen Längen der Schwenkarme 7 der vor- und der nachlaufenden Transportschalen 8 etwas länger als die der mittleren Transportschale 8. Die Winkelhalbierende W der relativen Schwenkbewegung um die Schwenkachse 9.1 fällt mit der Winkelhalbierenden der beiden Verbindungslinien zwischen der Rotorachse 6.1 und den Referenzachsen der vor- und der nachlaufenden Transportschale 8 zusammen, so daß die Referenzachsen bei der Aufnahme und bei der Abgabe auf dem Zielkreis 29 liegen.

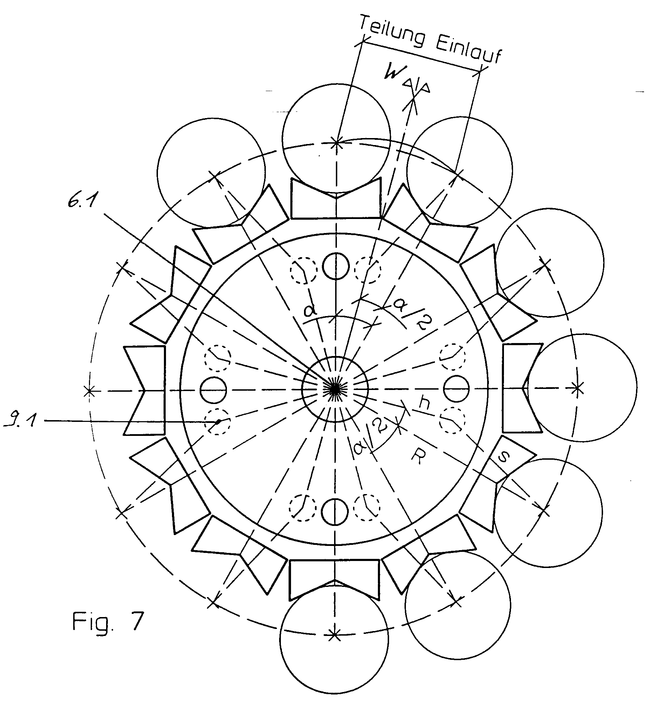

In Figur 7 sind die Hebelverhältnisse bei der Übergabetrommel des Ausführungsbeispiels dargestellt, wobei die zwölf Transportschalen in fiktiven Stellungen ohne Geschwindigkeitsausgleich ausgleich untereinander eingezeichnet sind. Der Teilungswinkel $\alpha$ beträgt bei zwölf umlaufenden Transportschalen dementsprechend 30°. Für den Geschwindigkeitsausgleich werden die vor- und die nachlaufenden Transportschalen (Fig. 6) um die Rotorachse 6.1 um diesen Teilungswinkel $\alpha$ in Umlaufrichtung gesehen zurück- bzw. vorgeschwenkt. Der Radius R des Verbindungskreises der Referenzpunkte der Hohlkörper ist proportional zu dem Produkt der vom Antransport vorgegebenen Teilung und der Anzahl der umlaufenden Transportschalen zu (Teilung*12)/2$\pi$. Der Abstand h der Schwenkachsen 9.1 zur Rotorachse 6.1 ist getriebetechnisch bedingt, insbesondere durch die Maße der Steuerkurve. Aus R, h und $\alpha$/2 ergibt sich schließlich die Länge s des wirksamen Schwenkarms, d. h. der Abstand der Referenzpunkte der Hohlkörper von ihren Schwenkachsen 9.1.

Neben der Verringerung des getriebetechnischen Aufwands weist die Übergabevorrichtung den synergistischen Effekt auf, daß die Verbindung der Transportschalen 8 mit einer Vakuum- oder Druckquelle erheblich vereinfacht werden kann, indem im Schwenklager der Pendelwelle 9 zwei Drehanschlüsse dieser Verbindung vereinigt werden.

Hierfür dient eine in Figur 4 dargestellte Steuerscheibe 16, die ortsfest angeordnet und der Stirnseite des Rotorflansches zugewandt ist, der von der Steuerkurve 12 abgewandt ist. Die äußere plane Stirnseite des Rotorflansches gleitet über die ihr zugewandte plane Stirnseite der Steuerscheibe 16. In der Steuerscheibe 16 ist in einem Teilbereich, im Ausführungsbeispiel über eine Hälfte der Steuerseite 16 halbkreisförmig, ein ausgenommener Kanal vorgesehen, der als Steuerniere zum Herstellen der Verbindung mit der Vakuumquelle dient. Bei der Drehbewegung des Rotors 6 streichen von der Übernahme eines Gegenstands vom Einlaufband 3 bis zur Übergabe an das Auslaufband 4 die Pendelwellen 9 der Schwenkarm 7 über den ausgenommenen Kanal der Steuerscheibe 16.

Jede der Pendelwellen 9 weist ihrerseits einen an der Stirnseite der Pendelwelle 9 mündenden inneren Fluidkanal 15 auf, der von dieser Öffnung durch die Pendelwelle 9 und den Schwenkarm 7 bis zur Transportschale 8 weitergeführt ist. Indem die stirnseitige Öffnung der Pendelwelle 9 bei einer Drehung des Rotors 6 über den Kanal an der Steuerscheibe 16 streicht, d.h. daß Rotorflansch und Steuerscheibe 16 in der Art zweier ansonsten dichtender Ventilscheiben zueinander wirken, wird auf einfache Art und Weise eine Verbindung zur Vakuumquelle hergestellt.

**Patentansprüche**

1. Vorrichtung zum Übergeben von Gegenständen, insbesondere Hohlkörper, wie Dosen und Tuben, von einem einlaufenden Transportmittel (3) zu einem auslaufenden Transportmittel (4), mit

   (a) wenigstens einem drehangetriebenen Rotor (6),
   (b) wenigstens einem mit einem Unterdruck beaufschlagbaren Haltemittel (8) für die Gegenstände (2), das zum gemeinsamen Antrieb an den Rotor (6) angelenkt ist,
   (c) wenigstens einem mit dem Haltemittel (8) verbundenen Steuermittel (11), das zur Erzeugung einer ungleichförmigen Transportgeschwindigkeit des Haltemittels (8) entlang einer Steuerkurve (12) zwangsgeführt wird, wobei
   d) das Haltemittel (8) zum Schwenken um eine zur Rotorachse (6.1) parallele Schwenkachse (9.1) auf einer um die Schwenkachse (9.1) drehbaren Pendelwelle (9) angeordnet ist, **dadurch gekennzeichnet, daß**
   e) der Unterdruck am Haltemittel (8) durch einen an der Stirnseite der Pendelwelle (9) mündenden inneren Kanal (15) erzeugt wird.

2. Vorrichtung nach Anspruch 1, dadurch gekennzeichnet, daß das Haltemittel (8) an einem auf der Pendelwelle (9) befestigten Schwenkarm (7) befestigt ist, der bei einem Umlauf um die Rotorachse (6.1) durch das mit dem Schwenkarm (7) verbundene Steuermittel (11) zu einer Schwenkbewegung gezwungen wird, wozu das Steuermittel (11) an einem vorzugsweise starr mit dem Schwenkarm (7) verbundenen Hebelarm (10) befestigt ist.

3. Vorrichtung nach Anspruch 1 oder 2, dadurch gekennzeichnet, daß der Schwenkarm (7) und ein von dem Haltemittel (8) aus gesehen über die Schwenkachse (9.1) hinausragender, vorzugsweise winkelig zu dem Schwenkarm (7) weisender Hebelarm (10) einen Schenkhebel bilden und das Steuermittel (11) an dem Hebelarm (10) angeordnet ist.

4. Vorrichtung nach einem der vorhergehenden Ansprüche, dadurch gekennzeichnet, daß eine stirnseitige Öffnung der Pendelwelle (9) bei einer Drehung des Rotors (6) über einen Kanal einer Steuerscheibe (16) streicht, die an einer Stirnseite des Rotors (6) angeordnet ist und über die das Haltemittel (8) mit einer Vakuumquelle verbunden wird.

5. Vorrichtung nach einem der vorhergehenden Ansprüche, dadurch gekennzeichnet, daß wenigstens zwei Rotoren (6) längs der gemeinsamen Rotorachse (6.1) nebeneinander angeordnet und in jedem der Rotoren (6) mehrere koaxial zur Rotorachse (6.1) angeordnete Pendelwellen (9) gestützt sind.

6. Vorrichtung nach einem der vorhergehenden Ansprüche, dadurch gekennzeichnet, daß die Zwangsführung des Steuermittels (11) kraftschlüssig gewährleistet wird.

7. Vorrichtung nach einem der vorhergehenden Ansprüche, dadurch gekennzeichnet, daß wenigstens zwei Haltemittel (8) längsseits der gemeinsamen Rotorachse (6.1) angeordnet sind und das eine Haltemittel (8) beim Umlaufen um die Rotorachse (9.1) um seine Schwenkachse (6.1) um einen Winkel (β) aus einer ersten Winkellage gegenüber dem anderen Haltemittel (8), in der die beiden Haltemittel (8) hintereinander umlaufen, in eine zweite Winkellage schwenkt, in der es sich vorzugsweise in Deckung mit dem anderen Haltemittel (8) befindet, wobei die erste Winkellage bei der Übergabe von durch das eine Transportmittel (3) hintereinander transportierten Gegenständen (2) und die zweite Winkellage bei der Übergabe der durch das andere Transportmittel (4) vorzugsweise nebeneinander transportierten Gegenstände (2) eingenommen wird.

8. Vorrichtung nach dem vorhergehenden Anspruch, dadurch gekennzeichnet, daß eine erste Ebene durch die Schwenkachse (9.1) der Pendelwelle (9) und die Rotorachse (6.1) eine Winkelhalbierende (W) mit einer zweiten Ebene durch einen zu der Pendelwelle (9) benachbarten Gegenstand (2a, 2b, 2c) bei der Übernahme von dem einlaufenden Transportmittel (3) und der Rotorachse (6.1) bildet.

## Claims

1. A device for transferring objects, in particular hollow bodies, such as cans and tubes, from an incoming conveying means (3) to an outgoing conveying means (4), with

   (a) at least one rotationally driven rotor (6),
   (b) at least one retaining means (8) for the objects, which can be acted upon with an under-pressure (8) and which is articulated to the rotor (6) for the common drive,
   (c) at least one control means (11) which is connected to the retaining means (8) and which is forcibly guided along a control cam (12) in order to produce a non-uniform conveying speed of the retaining means (8), wherein
   d) in order to pivot about a pivot axis (9.1) parallel to the rotor axis (6.1), the retaining means (8) is mounted on an oscillating shaft (9) rotatable about the pivot axis (9.1),
   **characterized in that**
   e) the under-pressure on the retaining means (8) is produced by an inner duct (15) opening on the front face of the oscillating shaft (9).

2. A device according to Claim 1, **characterized in that** the retaining means (8) is secured to a pivot arm (7) which is secured to the oscillating shaft (9) and which during a rotation about the rotor axis (6.1) is forced to make a pivoting movement by the control means (11) connected to the pivot arm (7), for which purpose the control means (11) is secured to a lever arm (10) connected preferably rigidiy to the pivot arm (7).

3. A device according to Claim 1 or 2, **characterized in that** the pivot arm (7) and a lever arm (10), projecting beyond the pivot axis (9.1) - as viewed from the retaining means (8) - and preferably orientated at an angle to the pivot arm (7), form a pivoting lever, and the control means (11) is arranged on the lever arm (10).

4. A device according to one of the preceding Claims, **characterized in that** during a rotation of the rotor (6) an opening in the front face of the oscillating shaft (9) passes over a duct in a disc cam (16) which is arranged on a front face of the rotor (6) and by way of which the retaining means (8) is connected to a vacuum source.

5. A device according to one of the preceding Claims, **characterized in that** at least two rotors (6) are arranged adjacent to one another along the common rotor axis (6.1), and a plurality of oscillating shafts (9) arranged coaxially with the rotor axis (6.1) are supported in each of the rotors (6).

6. A device according to one of the preceding Claims, **characterized in that** the control means (11) is forcibly guided with non-positive locking.

7. A device according to one of the preceding Claims, **characterized in that** at least two retaining means (8) are arranged along the common rotor axis (6.1), and during rotation about the rotor axis (9.1) [*sic - recte* (6.1)] one retaining means (8) pivots about its pivot axis (6.1) [*sic - recte* (9.1)] by an angle (β) with respect to the other retaining means (8) from a first angular position, in which the two retaining means (8) rotate one behind the other, into a second angular position, in which it is preferably in alignment with the other retaining means (8), wherein the first angular position is occupied during the transfer of the objects (2) conveyed one behind the other by one conveying means (3) and the second angular position is occupied during the transfer of the objects (2) conveyed preferably adjacent to one another by the other conveying means (4).

8. A device according to the preceding Claim, **characterized in that** a first plane through the pivot axis (9.1) of the oscillating shaft (9) and the rotor axis (6.1) form an angle-bisecting line (**W**) with a second plane through an object (2a, 2b, 2c) adjacent to the oscillating shaft (9) during the transfer from the incoming conveying means (3) and the rotor axis (6.1).

## Revendications

1. Dispositif de transfert d'objets, en particulier des corps creux tels que des boîtes métalliques et des tubes, depuis un moyen de transport d'entrée (3) jusqu'à un moyen de transport de sortie (4), comprenant

   (a) au moins un rotor (6) entraîné en rotation,
   (b) au moins un moyen (8) de retenue des objets (2), pouvant être sollicité par une dépression et articulé sur le rotor (6), en vue de l'entraînement commun,

(c) au moins un moyen de commande (11) relié au moyen de retenue (8) et guidé à force, le long d'une came de commande (12), pour produire une vitesse irrégulière de transport dudit moyen de retenue (8),

(d) ledit moyen de retenue (8) étant disposé, en vue de pivoter autour d'un axe de pivotement (9.1) parallèle à l'axe rotorique (6.1), sur un arbre oscillant (9) pouvant tourner autour dudit axe de pivotement (9.1),

caractérisé par le fait que

(e) la dépression est engendrée, sur le moyen de retenue (8), par l'intermédiaire d'un canal intérieur (15) débouchant à la face de devant de l'arbre oscillant (9).

2. Dispositif selon la revendication 1, caractérisé par le fait que le moyen de retenue (8) est fixé à un bras pivotant (7) fixé à l'arbre oscillant (9) et auquel un pivotement est imprimé à force, lors d'une révolution autour de l'axe rotorique (6.1), par le moyen de commande (11) relié audit bras pivotant (7), à cet effet ledit moyen de commande (11) étant fixé à un bras de levier (10) relié, de préférence rigidement, audit bras pivotant (7).

3. Dispositif selon la revendication 1 ou 2, caractérisé par le fait que le bras pivotant (7) et un bras de levier (10), faisant saillie au-delà de l'axe de pivotement (9.1) considéré à partir du moyen de retenue (8), et décrivant de préférence un angle avec ledit bras pivotant (7), forment un levier pivotant, le moyen de commande (11) étant disposé sur ledit bras de levier (10).

4. Dispositif selon l'une des revendications précédentes, caractérisé par le fait que, lors d'une rotation du rotor (6), un orifice frontal de l'arbre oscillant (9) passe en regard d'un canal d'un disque de commande (16) disposé à une face de devant dudit rotor (6), et par l'intermédiaire duquel le moyen de retenue (8) est raccordé à une source de dépression.

5. Dispositif selon l'une des revendications précédentes, caractérisé par le fait qu'au moins deux rotors (6) sont agencés en juxtaposition le long de l'axe rotorique commun (6.1) et plusieurs arbres oscillants (9), disposés coaxialement audit axe rotorique (6.1), prennent appui dans chacun desdits rotors (6).

6. Dispositif selon l'une des revendications précédentes, caractérisé par le fait que le guidage forcé du moyen de commande (11) est garanti mécaniquement.

7. Dispositif selon l'une des revendications précédentes, caractérisé par le fait qu'au moins deux moyens de retenue (8) sont disposés dans le sens longitudinal de l'axe rotorique commun (6.1) et, lors de la révolution autour dudit axe rotorique (9.1), l'un (8) desdits moyens de retenue pivote d'un angle (β) autour de son axe de pivotement (6.1) à partir d'une première position angulaire, vis-à-vis de l'autre moyen de retenue (8), dans laquelle les deux moyens de retenue (8) tournent en succession, jusqu'à une seconde position angulaire dans laquelle ledit moyen se trouve de préférence en recouvrement avec l'autre moyen de retenue (8), la première position angulaire étant prise lors du transfert d'objets (2) transportés en succession par l'un (3) des moyens de transport, et la seconde position angulaire étant prise lors du transfert des objets (2) préférentiellement transportés en juxtaposition par l'autre moyen de transport (4).

8. Dispositif selon la revendication précédente, caractérisé par le fait qu'un premier plan, passant par l'axe de pivotement (9.1) de l'arbre oscillant (9) et par l'axe rotorique (6.1), forme une bissectrice (W) avec un second plan passant par un objet (2a, 2b, 2c) voisin dudit arbre oscillant (9) lors du prélèvement d'avec le moyen de transport d'entrée (3), et par ledit axe rotorique (6.1).

Fig. 1

Fig. 2

Fig. 3

Fig. 4

Fig. 5

Fig. 6

Fig. 7